# EUROPEAN PATENT SPECIFICATION

(11) **EP 3 286 379 B1**
(45) Date of publication and mention of the grant of the patent: **05.06.2019**
(21) Application number: 16723402.0
(22) Date of filing: 21.04.2016
(51) Int. Cl.: D21J 7/00

(54) **USE OF A STRENGTH COMPOSITION FOR INCREASING WET DIMENSIONAL STABILITY OF A MOULDED PULP ARTICLE**
VERWENDUNG EINER FESTIGKEITSSTEIGERNDEN ZUSAMMENSETZUNG ZUR ERHÖHUNG DER NASSFORMSTABILITÄT EINES GEGOSSENEN PULPEARTIKELS
UTILISATION DE COMPOSITION DE RÉSISTANCE POUR ACCROÎTRE LA STABILITÉ DIMENSIONNELLE HUMIDE D'UN ARTICLE DE PÂTE MOULÉ

(30) Priority: 21.04.2015 CN 201510190683; 05.05.2015 FI 20155325
(43) Date of publication of application: 28.02.2018
(73) Proprietor: Kemira Oyj, 00180 Helsinki (FI)
(72) Inventor: HEMMES, Jan-Luiken, 51467 Bergisch Gladbach (DE); WEI, Jonathan, Shanghai 201102 (CN); LU, Rongjun, Shanghai 200237 (CN)
(74) Representative: Berggren Oy, Turku
(86) International application number: PCT/FI2016/050261
(87) International publication number: WO 2016/170232

(56) References cited:
- EP-A1- 1 180 559
- WO-A1-03/044279
- WO-A1-2009/014483
- DE-A1- 4 223 604
- GB-A- 2 050 459
- US-A1- 2013 081 771
- US-A1- 2014 166 223

## Description

The present invention relates to a use of a strength composition for increasing wet dimensional stability of a moulded pulp article according to the preambles of enclosed claims.

Moulded pulp articles are made by preparing a fibre slurry, typically from recycled fibre material, and placing the slurry into a mould. The mould usually comprises perforations and/or mesh, and suction and/or vacuum is used to create an even coat of slurry in the mould. After this the formed moulded article is dried, for example in a separate dryer, or by heating the mould itself.

Moulded pulp articles are widely used for variety of purposes such as packaging material, egg cartons, food service trays, beverage carriers, clamshell containers, plates, and bowls. Lately, it has been proposed that moulded pulp articles can be used even for making moulds, which are used in casting of concrete structures and/or products. It is clear that the above-mentioned use require dimensional stability and physical strength from the moulded pulp articles even when they are wetted. Therefore there exists an immediate need for improving the wet dimensional stability of moulded pulp articles, especially in strongly alkaline environment.

GB 2050459 discloses a moulding paste comprising an aqueous suspension of fibrous or particulate material and water binding material.

DE 4223604 A1 discloses method for increasing the wet strength of moulded or pressed cellulose articles, which method comprises impregnation with a solution of an water-insoluble polymer, copolymer, etc.

WO 03/044279 discloses a manufacturing process for a moulded plant bodies.

US 2013/0081771 discloses a method where an aldehyde functionalized resin and polyamidoamine-epihalohydrin resin are introduced to an aqueous pulp.

EP 1180559 discloses two-part polymer binder additive for fibrous sheet. The binder comprises a resin system comprising polyamidoamine-epihalohydrin resin and a latex, as well as an anionic polymer.

An object of this invention is to minimise or possibly even eliminate the disadvantages existing in the prior art.

Another object of the present invention is to provide a cost-effective method for increasing wet dimensional stability and/or physical strength of a moulded pulp article, especially in strongly alkaline environment.

These objects are attained with the invention having the characteristics presented below in the characterising part of claim 1.

Some preferred embodiments of the invention are presented in the dependent claims.

Now it has been surprisingly found that the wet three-dimensional stability and the physical strength of a moulded pulp article, especially in strongly alkaline environment, is significantly improved when a strength composition comprising at least one synthetic permanent wet strength resin is added to the fibre slurry before the formation of the moulded article. It is assumed that, without wishing to be bound by a theory, the addition of the strength composition into the slurry provides so strong interaction between the strength resin and the fibres during the formation of the moulded article that it provides improved stability and strength even in demanding environment with e.g. strong alkaline nature.

Furthermore, it has been observed that especially the long term wet three-dimensional stability and physical strength of the moulded article are improved. Thus the moulded article is able to retain is physical strength and physical dimensions unaltered or nearly unaltered for prolonged periods of time, e.g. for several hours, preferably for several days, sometimes even for several months, even if the moulded article is exposed to a strongly alkaline environment. According to one embodiment of the invention, the moulded pulp produced by the present method may have a wet tensile strength index > 2 Nm/g, preferably > 4 Nm/g, more preferably > 10 Nm/g. The tensile strength is measured by using hand sheets, having a basis weight of 100 g/m², made from the pulp after addition of the strength composition.

In the present context, the term "strongly alkaline environment" denotes an environment, where the pH is in the range of 10 - 14, typically 11 - 14, more typically 12 - 14. These pH ranges are commonly present in casting of concrete. The present invention provides improved moulded pulp articles that retain their three-dimensional shape and strength even in strongly alkaline environment, preferably for prolonged periods as described above. This makes the articles suitable for use as mould in casting of concrete structures.

The fibre slurry may be obtained by disintegrating fibre material into water. The fibre slurry may comprise fibre material originating from recycled paper and/or board, such as old corrugated containerboard (OCC). Preferably the fibre material is OCC. According to one preferred embodiment the fibre material comprises at least 70 weight-%, preferably at least 80 weight-% of fibres originating from recycled paper or board, such as OCC. In some preferable embodiments the fibre stock may comprise even > 90 weight-%, preferably even 100 weight-%, of fibres originating from recycled paper or board, such as OCC. The fibre slurry is feed to a forming tank of a moulding apparatus.

The permanent wet strength resin is a cross-linked resin and selected from polyamidoamine-epihalohydrin resins. It has been observed that especially polyamidoamine-epihalohydrin resins provide improved properties, especially wet three-dimensional stability, in strongly alkaline environments.

According to one preferable embodiment of the invention the permanent wet strength resin is a self-crosslinking polyamidoamine-epihalohydrin resin. Polyamidoamine-epihalohydrin resins are based on a polyamidoamine backbone, which is a result of a condensation reaction between adipic acid and diethylenetriamine. A subsequent reaction with epihalohydrin results a crosslinked polymer resin structure, where highly reactive azetidinium groups are created along the polymer backbone. According to one embodiment the polyamidoamine-epihalohydrin resin may have an azetidinium content of < 80 %, preferably < 70 %, more preferably < 60 %, even more preferably < 50 %, sometimes even < 40 %. According to one embodiment, the polyamidoamine-epihalohydrin resin may have an azetidinium content in the range of 0.01 - 80 %, preferably 0.01 - 70 %, more preferably 0.01 - 60 %, even more preferably 0.01 - 50 %, sometimes even 0.01 - 40 %.

The amount of azetidinium groups may be controlled by careful selection, for example, of the epihalohydrin/amine ratio. According to one exemplary embodiment, the polyamidoamine-epihalohydrin resin has an epihalohydrin/amine ratio of < 0.8, preferably < 0.5, more preferably < 0.45, even more preferably < 0.4, sometimes even < 0.3. The lower limit for this epihalohydrin/amine ratio may be 0.1, preferably 0.01. According to one embodiment the resin may have the epihalohydrin/amine ratio in the range of 0.01 - 0.8, preferably 0.01 - 0.5, more preferably 0.01 - 0.45, even more preferably 0.01 - 0.4, sometimes even 0.01 - 0.3. The epihalohydrin/amine ratio is calculated as the molar ratio of epihalohydrin to amine.

Suitable polyamidoamine-epihalohydrin resins may have a weight average molecular weight in the range of 80 000 - 250 000 g/mol, preferably 150 000 - 250 000 g/mol. The molecular weight is determined by size exclusion chromatography, using poly(2-vinylpyridine) as calibration standard.

As described above polyamidoamine-epihalohydrin resins have a significant amount of reactive azetidinium groups, which provide the resin with a high cationic charge, which improves the retention of the resin to the fibres and provides the resin with a self-crosslinking ability. Preferably the polyamidoamine-epihalohydrin resin has a charge density of 1.5 - 4.5 meq/g, preferably 2.0 - 4.0 meq/g, more preferably 2.1 - 3.0 meq/g, determined at pH 7 by titration with potassium salt of polyvinylsulfate. When retained in the moulded pulp article the polyamidoamine-epihalohydrin resin self-crosslinks and forms a strong protection around fibre-fibre bonds and prevents the bonds from hydrolysing, even in alkaline environment.

Preferably the permanent wet strength resin is polyamidoamine-epichlorohydrin.

According to one preferred embodiment the strength composition comprises both polyamidoamine epihalohydrin resin and anionic polyacrylamide. The anionic polyacrylamide may improve the retention of the permanent wet strength resin to the fibres. The ratio of the anionic polyacrylamide and polyamidoamine epihalohydrin resin may be about 0.05 to 1.

The strength composition is added to the pulp slurry before the formation of the moulded pulp article, for example during the manufacture of the pulp slurry, its storage or transport. The strength composition may be added into a pulper, pulp storage tank or to a forming tank of the moulding apparatus.

According to one preferred embodiment of the present invention the strength composition is added in such amount that the zeta potential of the fibre slurry remains < -2.0 mV after the addition of the strength composition. When the zeta potential approaches too close to neutral value, foaming may become a problem. Therefore it is preferred that the strength agent composition is added in amount the zeta potential of the fibre slurry is < -3.0 mV, more preferably < -5 mV, even more preferably < -10 mV after the addition of the strength composition.

The strength composition is added in amount that results 1.3 - 26 kg permanent wet strength resin/ton dry fibre slurry, preferably 2.6 - 18.2 kg permanent wet strength resin/ton dry fibre slurry, more preferably 3 - 15 kg permanent wet strength resin/ton dry fibre slurry, even more preferably 5.2 - 13 kg permanent wet strength resin/ton dry fibre slurry, sometimes even 5.2 - 11 kg permanent wet strength resin/ton dry fibre slurry, calculated as dry permanent wet strength resin. It was unexpectedly observed that the improvement in wet three-dimensional stability and physical strength of the moulded article can be achieved even with relative low dosage of the strength composition. This is advantageous, not only because thus the above-mentioned problems associated with neutral zeta potential values may be avoided, but also because the chemical costs may be minimized in the process.

According to one embodiment of the invention a defoaming agent may be added to the fibre slurry. The defoaming agent may be added before the addition of the strength composition. The defoaming agent may be selected from silica based defoaming agents and defoaming agents based on fatty alcohols. Typically the defoaming agent is added in amount of 200 - 500 g/ton of dry fibre slurry, preferably 200 - 300 g/ton of dry fibre slurry, more preferably 200 - 250 g/ton of dry fibre slurry.

According to one preferable embodiment the strength composition further comprises a hydrophobic agent. The hydrophobic agent may be alkyl ketene dimer wax or paraffin wax, preferably alkyl ketene dimer wax. Suitable alkyl ketene dimer wax may have a melting point in the range of 40 - 70 °C, preferably 44.5 - 64 °C, more preferably 44.5 - 49 °C. The amount of hydroph obic agent may be 0.1 - 20 weight-%, preferably 2 - 17 weight-%, more preferably 5 - 15 weight-% from the weight of the wet strength resin, calculated as dry and active.

According to one embodiment the fibre slurry is free from inorganic particles, such as fillers or colouring pigments.

According to one embodiment of the invention the moulded pulp article is allowed to dry naturally in the atmosphere after its formation. For example, the moulded pulp article is allowed to dry 10 - 24 h, preferably 15 - 20 h, before the thermoforming treatment. After natural drying the mould pulp article is thermoformed in a hot press by using a temperature above 150 °C.

According to one preferable embodiment of the present invention the produced moulded pulp articles are used in manufacture of concrete products and structures. The moulded pulp article can be a cast mould or pod for forming of concrete articles and/or structures, for example when casting concrete floors, building foundations or similar structures.

### EXPERIMENTAL

Some embodiments of the invention are described in the following non-limiting examples.

### Example 1

Commercial Old Corrugated Container (OCC) pulp slurry, concentration 5 weight-%, was used as recycled fibre raw material. Two different polyamidoamine-epichlorohydrin (PAE) based wet strength resins (Kemira Oyj, Finland), denoted here as Fiberbuilder A and Fiberbuilder B, were used to improve hand sheet strength. Properties of the wet strength resins are given in Table 1. Alkylketene dimer wax (Kemira Oyj, Finland) was used in some of the experiments together with the wet strength resins.

**Table 1. Properties of the wet strength resins employed in the experiments.**

| **Chemical** | **Solids content,%** | **PCD (meq/g)** | **pH** |
|---|---|---|---|
| Fiberbuilder A | 26.32 | 2.52 | 3.88 |
| Fiberbuilder B | 26.60 | 2.93 | 3.72 |

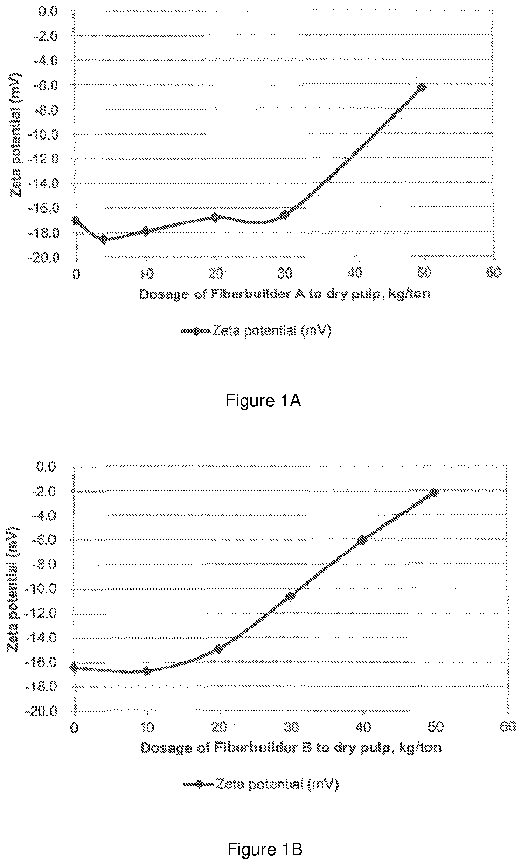

Capability of the fibres to retain wet strength resin was evaluated based on Zeta potential of the fibre slurry, which was measured by using Mütek SZP-6. Effect of the strength resin dosage on the Zeta potential of the fibre slurry is shown in figures 1A and 1B. It is from Figs. 1A and 1B that an increasing dosage of wet strength resin increases the Zeta potential of the fibre slurry.

The original deflaked OCC pulp was diluted into 1 weight-% concentration with tap water under agitation. The used chemicals were dosed into the pulp slurry of disintegrated OCC. Wet strength resin dosage was 10 kg/t, 30 kg/t or 50 kg/t, and the AKD dosage was 0 kg/t or 5 kg/t. The prepared pulp slurry was first agitated at about 500 rpm for 15 seconds, and then the used chemicals were dosed with an interval of 15 seconds each. After dosing, the mixing of the pulp slurry was continued for 15 seconds. Hand sheets, having a basis weight of 100 g/m², were produced on a hand sheet maker machine. Sheets were dried in automatic drying chambers of hand sheet maker machine for 6 minutes at the temperature of 93 °C and vacuum of 96 kPa to rapidly remove the moisture.

Before testing of the strength properties, of the produced hand sheets, i.e. dry tensile index and dry tensile index, the sheets were pre-conditioned for 24 h at 23 °C in 50 % relative humidity according to standard ISO 187. Devices and standards, which were used to measure the properties of the sheets, are given in Table 2.

**Table 2 Sheet testing devices and standards**

| **Measurement** | **Device** | **Standard** |
|---|---|---|
| Hand sheet making | Estanit Rapid Köthen hand sheet maker | ISO 5269-2-2004 |
| Wet tensile index | Thwing-Albert vertical tensile tester | GB/T 12914-2008 |
| Dry tensile index | Thwing-Albert vertical tensile tester | GB/T 12914-2008 |

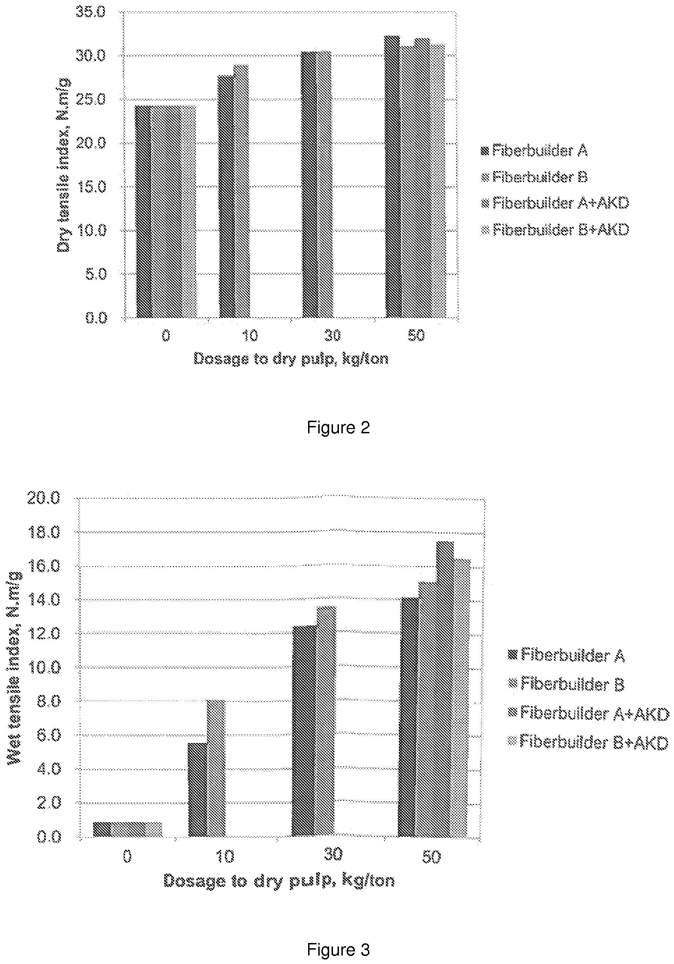

The wet tensile index and dry tensile index results at different wet strength resin and AKD dosages are shown in Figures 2 and 3. It is seen from Figs. 2 and 3 that a very good wet tensile index results were obtained. Also an improvement in dry tensile index was observed. For dry tensile index the difference between the results obtained with Fiberbuilder A or Fiberbuilder B was not big. However, it was observed that Fiberbuilder B gave better wet tensile index results than Fiberbuilder A. AKD addition provided extra enhancement, for both wet strength resins.

### Example 2

Based on the laboratory test of Example 1 Fiberbuilder B was selected for further tests in a pilot scale experiment at a mill producing moulded pulp articles. Fiberbuilder B was tested both together with AKD and without AKD. Test plan is given in Table 3.

**Table 3 Test plan for pilot scale experiments**

| Test No | Chemical(s) | Dosage kg/ton | Box No. |
|---|---|---|---|
| 1 | AKD | 60 | 1, 2, 3 |
| 2 | Fiberbuilder B | 30 | B1, B2 |
| 3 | Fiberbuilder B + AKD | 30 + 5 | B3, B4 |
| 4 | Fiberbuilder B | 50 | B5, B6 |
| 5 | Fiberbuilder B + AKD | 50 +5 | B7, B8 |

In Test no 1 the used AKD solution had a solid content of 13 %. For Box 2 AKD was added to the slurry and for Box 3 the AKD was applied as a coating.

The production process for the moulded pulp articles was as follows:
1. Preparation of about 5 weight-% fiber slurry recycled fluting board in a pulper, the preparation takes about 5∼6 min;
2. Transfer of the fibre slurry into 10 m³ pulp storage tank, where the pulp slurry is diluted from the concentration of 5 weight-% to about 1 weight-%;
3. Pumping about 500 litres of pulp slurry to a forming tank of a moulding machine, dewatering and moulding of boxes;
4. Drying in the atmosphere, thermoforming and making of the final articles with hot press, where the temperature is about 180 to 190 °C.

In these tests the strength composition/wet strength agents were added into the forming tank of the moulding machine and manual agitation for 5 min was employed before the forming of the article. Natural drying in the atmosphere lasted for 16 hours before thermoforming.

Table 4 lists the weight of the boxes before and after the thermoforming treatment.

**Table 4 Weight of the boxes before (wet weight) and after thermoforming (dry weight).**

| Box No. | Wet weight (kg) | Dry weight (kg) | Processing time (min) |
|---|---|---|---|
| 1 | - | 5.5 | - |
| 2 | - | 5.5 | - |
| 3 | - | 5.4 | - |
| B1 | 11.0 | 5.0 | 21 |
| B2 | 10.1 | 4.8 | 21 |
| B3 | 10.4 | 5.1 | 20 |
| B4 | 10.1 | 5.0 | 20 |
| B5 | 11.6 | 5.8 | 20 |
| B6 | 10.1 | 5.0 | 20 |
| B7 | 11.5 | 5.8 | 20 |
| B8 | 10.8 | 5.3 | 19.5 |

After the thermoforming the boxes were cooled down, and a series of performance tests were conducted to test the physical strength and dimensional stability of the boxes. Boxes 1, 2, 3, B2, B3, B6, B8 were chosen for the performance test series.

### 1. Performance test 1

All the boxes were arranged in a row and 80 kg weight was put on top of each box for about 10 seconds. All the boxes were stable.

### 2. Performance test 2

Tap water was sprayed onto the boxes for 15 min, then 80 kg weight was put on top of each box for about 10 seconds. All the boxes were stable, but Box 1 seemed to be slightly softer than the others. After that a gasket was put on top of the boxes and 80 kg weight was put on the gasket to increase the intensity of pressure. Both the center and the border of the top face of each box were tested. Box 1 broke but the other boxes were still stable.

### 3. Performance test 3

Spraying of tap water was continued onto the boxes for another 15min, which makes the total spraying time to 30 min. After spraying 80 kg weight was again put on top of each box for about 10 seconds. All the boxes were stable. After that a gasket was put on top of the boxes and 80 kg weight was put on the gasket to increase the intensity of pressure. Both the center and the border of the top face of each box were tested. Box 3 broke but the other boxes were still stable.

### 4. Performance test 4

All the remaining boxes were enveloped with a plastic film to simulate wet environment and keep for 2 hours. Then 80 kg weight was put on top of each box for about 10 seconds. At this stage, Box 2 broke. Then a gasket was put on top of the boxes and 80 kg weight was put on the gasket to increase the intensity of pressure. At this stage, Box B3 broke. Box B2 was softer than Boxes B6 and B8, which still showed satisfactory strength properties and dimensional stability.

Thus it can be concluded that a 50 kg/ton dosage of Fiberbuider B gave satisfactory wet strength properties and dimensional stability.

Even if the invention was described with reference to what at present seems to be the most practical and preferred embodiments, it is appreciated that the invention shall not be limited to the embodiments described above, but the invention is intended to cover also different modifications and equivalent technical solutions within the scope of the enclosed claims.

## Claims

1. Use of a strength composition for increasing wet three-dimensional stability of a moulded pulp article in an alkaline environment, which moulded pulp article is produced by a method, which comprises
- obtaining a fibre slurry and feeding it to a forming tank of a moulding apparatus,
- forming a moulded pulp article from the fibre slurry,
- drying the moulded pulp article,
**characterised in that**
the strength composition comprises at least one permanent wet strength resin, which is a cross-linked polyamidoamine-epihalohydrin resin and the strength composition is added to the fibre slurry before the forming of the moulded pulp article in amount that results 1.3 - 26 kg permanent wet strength resin/ton dry fibre slurry.

2. Use according to claim 1, **characterised in that** pH of the alkaline environment is in the range of 10 - 14, typically 11 - 14, more typically 12 - 14.

3. Use according to claim 1, **characterised in that** the polyamidoamine-epihalohydrin resin has an azetidinium content of < 80 %, preferably < 70 %, more preferably < 60 %, even more preferably < 50 %.

4. Use according to claim 1, **characterised in that** the polyamidoamine-epihalohydrin resin has a charge density of 1.5 - 4.5 meq/g, preferably 2.0 - 4.0 meq/g, more preferably 2.1 - 3.0 meq/g.

5. Use according to any of claims 1 - 4, **characterised in that** the strength composition is added in such amount that the zeta potential of the fibre slurry remains < -2.0 mV after the addition of the strength composition.

6. Use according to any of claims 1 - 5, **characterised in that** the strength composition is added in amount that results 2.6 - 18.2 kg permanent wet strength resin/ton dry fibre slurry, more preferably 3 - 15 kg permanent wet strength resin/ton dry fibre slurry, even more preferably 5.2 - 13 kg permanent wet strength resin/ton dry fibre slurry.

7. Use according to any of claims 1 - 6, **characterised in that** the strength composition is added into added into a pulper, pulp storage tank or into the forming tank of the moulding apparatus.

8. Use according to any of claims 1 - 7, **characterised in that** the strength composition comprises polyamidoamine-epihalohydrin resin and anionic polyacrylamide, preferably the ratio of the anionic polyacrylamide and polyamidoamine-epihalohydrin resin being 0.05 to 1.

9. Use according to any of claims 1 - 8, **characterised in that** the strength composition further comprises a hydrophobic agent, which is selected from alkyl ketene dimer wax or paraffin wax.

10. Use according to claim 9, **characterised in that** the amount of hydrophobic agent is in the range of 0.1 - 20 weight-%, preferably 2 - 17 weight-%, more preferably 5 - 15 weight-%, from the weight of the wet strength resin

11. Use according to any of claims 1 - 10, **characterised in that** the fibre slurry comprises fibre material originating from recycled paper or board, such as old corrugated containers (OCC).

12. Use according to claim 11, **characterised in that** the fibre material comprises at least 70 weight-%, preferably at least 80 weight-% of fibres originating from recycled paper or board.

13. Use according to any of claims 1 - 12, **characterised in that** the finished moulded pulp article is a cast mould or pod for forming of concrete articles and/or structures.

## Patentansprüche

1. Verwendung einer Festigkeitszusammensetzung zum Erhöhen der feuchten dreidimensionalen Stabilität eines geformten Zellstoffartikels in einer alkalischen Umgebung, wobei der geformte Zellstoffartikel hergestellt ist durch ein Verfahren, welches umfasst:
- Erhalten einer Faseraufschlämmung und Zuführen dieser zu einem Formungsbehälter einer Formvorrichtung,
- Bilden eines geformten Zellstoffartikels aus der Faseraufschlämmung,
- Trocknen des geformten Zellstoffartikels,
**dadurch gekennzeichnet, dass**
die Festigkeitszusammensetzung wenigstens ein permanentes Nassfestigkeitsharz, das ein vernetztes Polyamidoamin-Epihalogenhydrin-Harz ist, umfasst, und die Festigkeitszusammensetzung vor dem Bilden des geformten Zellstoffartikels in einer Menge, die 1,3 - 26 kg permanentes Nassfestigkeitsharz/Tonne trockene Faseraufschlämmung ergibt, zu der Faseraufschlämmung gegeben wird.

2. Verwendung gemäß Anspruch 1, **dadurch gekennzeichnet, dass** der pH-Wert der alkalischen Umgebung im Bereich von 10 - 14, typischerweise 11 - 14, noch typischerweise 12 - 14, liegt.

3. Verwendung gemäß Anspruch 1, **dadurch gekennzeichnet, dass** das Polyamidoamin-Epihalogenhydrin-Harz einen Azetidiniumgehalt von < 80%, vorzugsweise < 70%, bevorzugter < 60%, noch bevorzugter < 50%, hat.

4. Verwendung gemäß Anspruch 1, **dadurch gekennzeichnet, dass** das Polyamidoamin-Epihalogenhydrin-Harz eine Ladungsdichte von 1,5 - 4,5 mÄq/g, vorzugsweise 2,0 - 4,0 mÄq/g, bevorzugter 2,1 - 3,0 mÄq/g, hat.

5. Verwendung gemäß einem der Ansprüche 1 - 4, **dadurch gekennzeichnet, dass** die Festigkeitszusammensetzung in so einer Menge zugegeben wird, dass das Zeta-Potential der Faseraufschlämmung < -2,0 mV nach der Zugabe der Festigkeitszusammensetzung bleibt.

6. Verwendung gemäß einem der Ansprüche 1 - 5, **dadurch gekennzeichnet, dass** die Festigkeitszusammensetzung in einer Menge, die 2,6 - 18,2 kg permanentes Nassfestigkeitsharz/Tonne trockene Faseraufschlämmung, bevorzugter 3 - 15 kg permanentes Nassfestigkeitsharz/Tonne trockene Faseraufschlämmung, noch bevorzugter 5,2 bis 13 kg permanentes Nassfestigkeitsharz/Tonne trockene Faseraufschlämmung, ergibt, zugegeben wird.

7. Verwendung gemäß einem der Ansprüche 1 - 6, **dadurch gekennzeichnet, dass** die Festigkeitszusammensetzung in einen Pulper, einen Zellstofflagerungsbehälter oder in den Formungsbehälter der Formvorrichtung gegeben wird.

8. Verwendung gemäß einem der Ansprüche 1 - 7, **dadurch gekennzeichnet, dass** die Festigkeitszusammensetzung Polyamidoamin-Epihalogenhydrin-Harz und anionisches Polyacrylamid umfasst, wobei das Verhältnis des anionischen Polyacrylamids und des Polyamidoamin-Epihalogenhydrin-Harzes vorzugsweise 0,05 bis 1 ist.

9. Verwendung gemäß einem der Ansprüche 1 - 8, **dadurch gekennzeichnet, dass** die Festigkeitszusammensetzung weiterhin ein hydrophobes Mittel, das aus Alkylketendimerwachs oder Paraffinwachs ausgewählt ist, umfasst.

10. Verwendung gemäß Anspruch 9, **dadurch gekennzeichnet, dass** die Menge des hydrophoben Mittels im Bereich von 0,1 - 20 Gewichts-%, vorzugsweise 2 - 17 Gewichts-%, bevorzugter 5 - 15 Gewichts-%, von dem Gewicht des Nassfestigkeitsharzes, liegt.

11. Verwendung gemäß einem der Ansprüche 1 - 10, **dadurch gekennzeichnet, dass** die Faseraufschlämmung Fasermaterial, das von recyceltem Papier oder Karton, wie alten Wellpappebehältern ("old corrugated containers", OCC), stammt, umfasst.

12. Verwendung gemäß Anspruch 11, **dadurch gekennzeichnet, dass** das Fasermaterial wenigstens 70 Gewichts-%, vorzugsweise wenigstens 80 Gewichts-%, an Fasern, die von recyceltem Papier oder Karton stammen, umfasst.

13. Verwendung gemäß einem der Ansprüche 1 - 12, **dadurch gekennzeichnet, dass** der fertiggestellte geformte Zellstoffartikel eine Gießform oder eine Hülse ("pod") zum Bilden von Betonartikeln und/oder -strukturen ist.

## Revendications

1. Utilisation d'une composition de résistance pour augmenter la stabilité tridimensionnelle à l'état humide d'un article de pâte moulée dans un environnement alcalin, lequel article de pâte moulée est produit par un procédé, qui comprend
- l'obtention d'une barbotine de fibres et sa fourniture à une cuve de formation d'un appareil de moulage,
- la formation d'un article de pâte moulée à partir de la barbotine de fibres,
- le séchage de l'article de pâte moulée,
**caractérisée en ce que**
la composition de résistance comprend au moins une résine de résistance à l'état humide permanente, qui est une résine de polyamidoamine-épihalogénohydrine réticulée et la composition de résistance est ajoutée à la barbotine de fibres avant la formation de l'article de pâte moulée dans une quantité qui aboutit à 1,3 à 26 kg de résine de résistance à l'état humide permanente/tonne de barbotine de fibres sèche.

2. Utilisation selon la revendication 1, **caractérisée en ce que** le pH de l'environnement alcalin est dans la plage de 10 à 14, typiquement 11 à 14, plus typiquement 12 à 14.

3. Utilisation selon la revendication 1, **caractérisée en ce que** la résine de polyamidoamine-épihalogénohydrine a une teneur en azétidinium < 80 %, de préférence < 70 %, de manière davantage préférée < 60 %, de manière encore davantage préférée < 50 %.

4. Utilisation selon la revendication 1, **caractérisée en ce que** la résine de polyamidoamine-épihalogénohydrine a une densité de charge de 1,5 à 4,5 meq/g, de préférence 2,0 à 4,0 meq/g, de manière davantage préférée 2,1 à 3,0 meq/g.

5. Utilisation selon l'une quelconque des revendications 1 à 4, **caractérisée en ce que** la composition de résistance est ajoutée dans une quantité telle que le potentiel zêta de la barbotine de fibres reste < -2,0 mV après l'addition de la composition de résistance.

6. Utilisation selon l'une quelconque des revendications 1 à 5, **caractérisée en ce que** la composition de résistance est ajoutée dans une quantité qui aboutit à 2,6 à 18,2 kg de résine de résistance à l'état humide permanente/tonne de barbotine de fibres sèche, de manière davantage préférée 3 à 15 kg de résine de résistance à l'état humide permanente/tonne de barbotine de fibres sèche, de manière encore davantage préférée 5,2 à 13 kg de résine de résistance à l'état humide permanente/tonne de barbotine de fibres sèche.

7. Utilisation selon l'une quelconque des revendications 1 à 6, **caractérisée en ce que** la composition de résistance est ajoutée dans un désintégrateur, une cuve de stockage de pâte ou dans la cuve de formation de l'appareil de moulage.

8. Utilisation selon l'une quelconque des revendications 1 à 7, **caractérisée en ce que** la composition de résistance comprend une résine de polyamidoamine-épihalogénohydrine et du polyacrylamide anionique, de préférence le rapport entre polyacrylamide anionique et résine de polyamidoamine-épihalogénohydrine étant de 0,05 à 1.

9. Utilisation selon l'une quelconque des revendications 1 à 8, **caractérisée en ce que** la composition de résistance comprend en outre un agent hydrophobe, qui est choisi parmi une cire dimère d'alkyl cétène ou une cire de paraffine.

10. Utilisation selon la revendication 9, **caractérisée en ce que** la quantité d'agent hydrophobe est dans la plage de 0,1 à 20 % en poids, de préférence 2 à 17 % en poids, de manière davantage préférée 5 à 15 % en poids, par rapport au poids de la résine de résistance à l'état humide.

11. Utilisation selon l'une quelconque des revendications 1 à 10, **caractérisée en ce que** la barbotine de fibres comprend une matière fibreuse tirant son origine de papier ou de carton recyclé, telle que du papier cannelure (OCC).

12. Utilisation selon la revendication 11, **caractérisée en ce que** la matière fibreuse comprend au moins 70 % en poids, de préférence au moins 80 % en poids de fibres tirant leur origine de papier ou de carton recyclé.

13. Utilisation selon l'une quelconque des revendications 1 à 12, **caractérisée en ce que** l'article de pâte moulée fini est un moule ou une coque pour la coulée destiné à former des articles et/ou des structures en béton.
